# EUROPÄISCHE PATENTSCHRIFT

(11) **EP 0 363 762 B1**
(45) Veröffentlichungstag und Bekanntmachung des Hinweises auf die Patenterteilung: **03.01.1996**
(21) Anmeldenummer: 89118124.0
(22) Anmeldetag: 29.09.1989
(51) Int. Cl.: G02B 21/22

(54) **Zwei optisch-mechanisch gekoppelte Operationsmikroskope mit koaxialer Beleuchtung**
Two optically-mechanically coupled operation microscopes with coaxial illumination
Deux microscopes d'opération couplés de façon optique et mécanique comportant un dispositif d'illumination coaxial

(30) Priorität: 05.10.1988 DE 3833876
(43) Veröffentlichungstag der Anmeldung: 18.04.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Sander, Ulrich, Dr., D-7082 Oberkochen (DE); Lemke, Ulrich, D-7920 Oggenhausen (DE); Vogel, Albrecht, D-7082 Oberkochen (DE)

(56) Entgegenhaltungen:
- DE-A- 3 602 095
- DE-A- 3 623 613
- DE-A- 3 723 574
- GB-A- 2 146 789

## Beschreibung

Die Erfindung betrifft ein Operationsmikroskop gemäß dem Oberbegriff des Anspruchs 1. Von den Beobachtungstuben ist mindestens einer drehbar um die optische Achse des anderen angeordnet, wobei deren Beobachtungsstrahlengänge ein gemeinsames Hauptobjektiv und ein gemeinsames optisches Strahlenteilersystem durchsetzen, und wobei in jedem Beobachtungstubus ein Vergrößerungssystem vorgesehen ist.

Die in der modernen Augenheilkunde benötigten Operationsmikroskope sollen die Möglichkeit bieten, daß zwei Operateure das gleiche Sehfeld unter dem selben Blickwinkel beobachten können. Die zweite Einblickrichtung sollte möglichst um 90° zur ersten versetzt liegen, wahlweise rechts oder links vom Hauptoperateur. Außerdem erfordern anspruchsvolle Operationstechniken, daß der Beleuchtungsstrahl möglichst koaxial zum Beobachtungsstrahl auf das Objekt geführt wird.

Es sind bereits verschiedene Vorschläge bekannt geworden, die zwei optisch-mechanisch gekoppelte Operationsmikroskope für zwei Operateure beschreiben, bei denen jedoch die Beleuchtung nicht koaxial zur Beobachtung geführt ist.

Zwei optisch-mechanisch gekoppelte Operationsmikroskope, von denen mindestens eines drehbar um die optische Achse des anderen angeordnet ist, deren Beobachtungsstrahlengänge ein gemeinsames optisches Teilersystem durchsetzen und bei dem der Beleuchtungsstrahl annähernd koaxial zum Beobachtungsstrahl auf das Operationsfeld geführt wird, ist aus der DE 33 33 471 A1 bekannt. Nachteilig bei diesem bekannten Operationsmikroskop wirkt sich aus, daß für jedes der beiden Operationsmikroskope ein Hauptobjektiv vorzusehen ist, und daß es zu überstrahlungen und störenden Lichtreflexen kommen kann, weil der Beleuchtungsstrahl durch eines der Objektive auf das Operationsfeld gelenkt wird.

Ein weiterer Vorschlag zur Anordnung zweier optisch-mechanisch gekoppelter Operationsmikroskope ist aus der DE 36 02 095 A1 bekannt. Dieses System ermöglicht es, die Einblickrichtungen der beiden Operateure relativ zur optischen Achse des Hauptobjektives zu variieren. Hierzu ist der zweite Beobachtungstubus schwenkbar um die optische Achse des Hauptobjektives angeordnet. Aufgrund der schwenkbaren Anordnung des zweiten Beobachtungstubus ist zur Strahlteilung ein Prisma vorgesehen, das in bestimmten Bereichen teildurchlässig ausgelegt ist. Nur auf diese Art und Weise kann beim Überlappen der Beobachtungspupillen von Haupt- und Mitbeobachter gewährleistet werden, daß beide Beobachter eine ausreichende Intensität wahrnehmen. In den verschiedenen möglichen Schwenkstellungen des zweiten Beobachtungstubus resultiert aufgrund des möglichen Überlapps der Beobachtungspupillen jedoch eine variierende, wahrgenommene Intensität. Diese schwankt zwischen 100 % und 50 % der Gesamtintensität des Beobachtungslichtes. Im Verlauf einer mikrochirurgischen Operation wird ein derartiges Schwanken der Bildintensität jedoch als störend empfunden.

Aus der DE 36 23 613 der Anmelderin ist desweiteren eine.koaxiale Beleuchtungseinrichtung für Operationsmikroskope bekannt, die zur Anordnung unterhalb des Hauptobjektives geeignet ist. Diesem Dokument sind jedoch keinerlei Hinweise zu entnehmen, wie eine zufriedenstellende gleichmäßige Intensitätsverteilung für die beiden Beobachter in einem System mit optischmechanisch gekoppelten Operationsmikroskopen gewährleistet werden kann.

Nachteile des Stands der Technik werden durch die Erfindung, wie sie in Anspruch 1 definiert ist, beseitigt.

Dabei ist im parallelen Strahlengang zwischen dem Hauptobjektiv und den Vergrößerungssystemen der beiden Beobachtungstuben ein zusammengesetztes Prisma angeordnet, das einen Teil des vom Objekt zurückreflektieren Lichtes zu einem ersten Beobachtungstubus durchläßt und den anderen Teil dieses Lichtes zu einem zweiten Beobachtungstubus umlenkt und wobei der Beleuchtungsstrahl über einen Umlenkspiegel unterhalb des Hauptobjektives koaxial zum Beobachtungsstrahl auf das Objektfeld eingespiegelt wird. Durch diese Maßnahme fällt die Achse des umgelenkten Beobachtungsstrahlenganges unterhalb des Umlenkprismas mit der optischen Achse des ersten Beobachtungstubus, der optischen Achse des gemeinsamen Hauptobjektives und der optischen Achse des Beleuchtungsstrahlenganges zusammen, und es durchdringen sich alle Beobachtungsstrahlenbüschel unterhalb des Hauptobjektives.

Ein vorteilhaftes Ausführungsbeispiel der Erfindung zeichnet sich dadurch aus, daß das zusammengesetzte Prisma als quaderförmiger Körper ausgeführt ist mit einer schräg zur Grundfläche verlaufenden Trennfläche, daß in der Trennfläche eine brillenförmige Spiegelschicht aufgebracht ist, welche die Beobachtungsstrahlen zu einem der Beobachtungstuben lenkt, während durch die unverspiegelten Bereiche der Trennfläche das Beobachtungslicht zum anderen Beobachtungstubus durchtritt.

In einer Alternative zur Erfindung kann das Prisma auch aus Teilerwürfeln oder Teilerplättchen zusammengesetzt sein, die entweder aus einer jeweils zwei Strahlengänge überdeckenden Einheit oder aus zwei getrennt gelagerten Elementen bestehen.

In einem zweckmäßigen Ausführungsbeispiel durchsetzen alle Beobachtungsstrahlenbüschel den unterhalb des Hauptobjektives befindlichen teildurchlässigen Umlenkspiegel, der zur Einspiegelung der koaxialen Beleuchtung dient, gemeinsam mit dem Beleuchtungsstrahlenbündel.

Ein Ausführungsbeispiel der Erfindung ist in der Zeichnung dargestellt und wird im folgenden näher beschrieben.

Es zeigen
Figur 1 eine schematische Darstellung der erfindungsgemäßen optisch-mechanisch gekoppelten Operationsmikroskope;
Figur 2a eine Seiten-Schnitt-Ansicht des erfindungsgemäß verwendeten Prismas;
Figur 2b die Ansicht auf das in Figur 2 dargestellte Prisma entlang der Linie IIb;

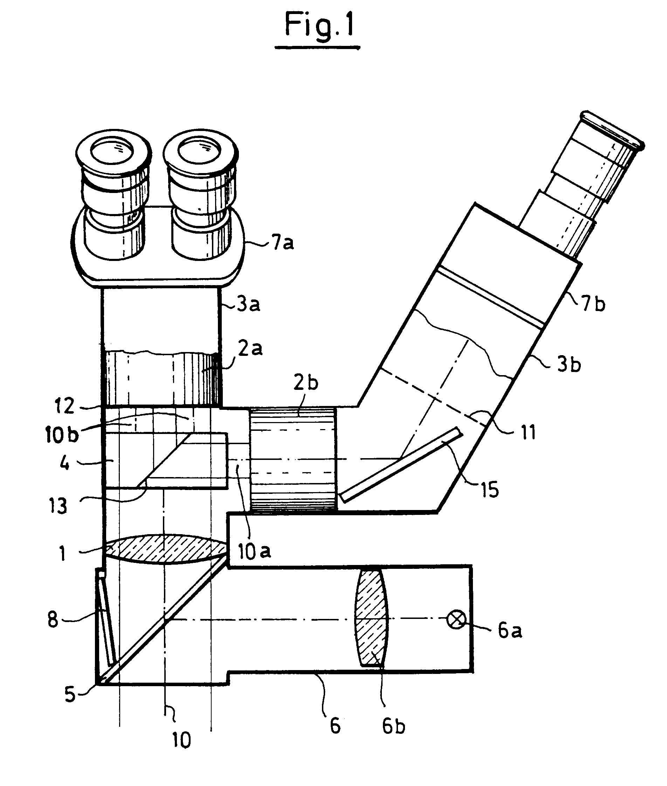

In der Darstellung der Figur 1 ist mit (6) eine Beleuchtungs-vorrichtung, bestehend aus Lichtquelle (6a) und Abbildungsoptik (6b) gekennzeichnet. Das Bezugszeichen (10) bezieht sich auf den zum Objekt gelenkten mittleren Beleuchtungsstrahl und vom Objekt kommenden mittleren Beobachtungsstrahl. Die vom Objekt kommenden Beobachtungsstrahlen durchsetzen das teildurchlässige Umlenkelement (5) und das Hauptobjektiv (1). Vom Prisma (4) wird ein Teil des Beobachtungslichtes (10a) zum Beobachtungstubus (3b) umgelenkt, der andere Teil des Beobachtungslichtes (10b) wird zum Beobachtungstubus (3a) durchgelassen. Im Gehäuse der Beleuchtungsvorrichtung (6) ist eine Lichtfalle (8) vorgesehen, die störendes Reflexlicht beseitigt. Zwischen den Prisma (4) und den Okulartuben (7a und 7b) befindet sich jeweils ein Vergrößerungssystem (2a und 2b).

Der Beobachtungstubus (3b) kann an der Schnittstelle (11) drehbar sein. Für den Beobachtungstubus (3a) kann ebenfalls eine drehbare Verbindung vorgesehen sein, beispielsweise an der Schnittstelle (12). Aus fertigungstechnischen Gründen kann es zweckmäßig sein, das Doppelmikroskop aus einzelnen oder zusammengefaßten Baugruppen zusammenzusetzen, beispielsweise aus der Beleuchtungseinheit (6) dem Prisma (4) und den Beobachtungstuben (3a,3b).

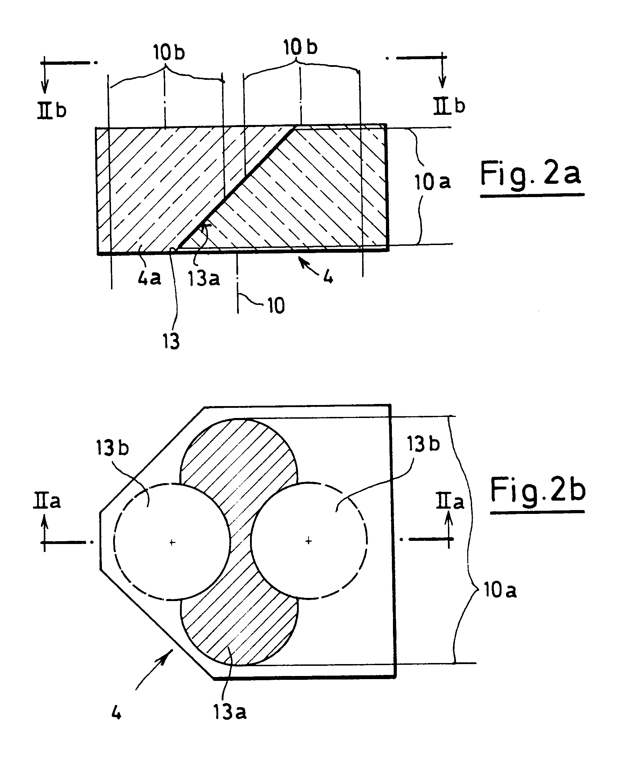

Bei dem in den Figuren 2a und 2b dargestellten zusammengesetzten Prisma (4) ist die Trennfläche mit (13) gekennzeichnet. In dieser Fläche (13) befindet sich die verspiegelte Schicht (13a) von brillenförmiger Kontur, die das Beobachtungslicht über einen Umlenkspiegel (15) zum Tubus (3b) umlenkt. In den unverspiegelten Bereichen (13b) des Prisnas (4) wird das Beobachtungslicht zum Tubus (3a) durchgelassen.

## Patentansprüche

1. Operationsmikroskop mit zwei stereoskopischen Beobachtungstuben (3a,3b) deren Beobachtungsstrahlengänge ein für beide Beobachtungstuben (3a,3b) gemeinsames Hauptobjektiv (1) und ein gemeinsames optisches Teilersystem (4) durchsetzen, und von denen einer drehbar um die optische Achse des Hauptobjektivs angeordnet ist, und bei denen in jedem Beobachtungstubus (3a, 3b) ein Vergrößerungssystemen (2a,2b) vorgesehen ist, wobei im parallelen Strahlengang zwischen dem Hauptobjektiv (1) und den Vergrößerungssystem en (2a,2b) ein zusammengesetztes Prisma (4) angeordnet ist, das einen Teil des vom Objekt zurückreflektierten Lichtes zu einem ersten Beobachtungstubus (3a) durchläßt und einen anderen Teil dieses Lichtes zu einem zweiten Beobachtungstubus (3b) umlenkt, dadurch gekennzeichnet daß der Beleuchtungsstrahl über einen unterhalb des Hauptobjektives (1) angeordneten teildurchlässigen Umlenkspiegel (5) koaxial zum Beobachtungsstrahl auf das Objektfeld eingespiegelt wird, und daß das zusammengesetzte Prisma (4) eine schräg zur optischen Achse des Hauptobjektivs verlaufende Trennfläche (13) aufweist, wobei in der Trennfläche eine Spiegelschicht (13a) aufgebracht ist, welche die Form eines langlichen Ovals besitzt, das symmetrisch an den Längs seiten im wesentlichen halbkreisförmig beschnitten ist und welche die Beobachtungsstrahlen zum zweiten Beobachtungstubus (3b) umlenkt, während durch die unverspiegelten Bereiche (13b) der Trennfläche (13) das Beobachtungslicht zum ersten Beobachtungstubus (3a) durchtritt.

2. Operationsmikroskop nach Anspruch 1, dadurch gekennzeichnet, daß der teildurchlässige Umlenkspiegel (5) von allen Beobachtungsstrahlenbündeln und vom Beleuchtungsstrahlenbündel durchsetzt wird.

3. Operationsmikroskop nach Anspruch 1, dadurch gekennzeichnet, daß das zusammengesetzte Prisma (4) als quaderförmiger Körper ausgeführt ist und die Trennfläche (13) schräg zu seiner Grundfläche (12) verläuft.

4. Operationsmikroskop nach Anspruch 1, dadurch gekennzeichnet, daß im Gehäuse der Beleuchtungsvorrichtung (6) eine Lichtfalle (8) vorgesehen ist, die störendes Reflexlicht beseitigt.

## Claims

1. Surgical microscope comprising two stereoscopic observation tubes (3a, 3b), the observation beam paths of which are transmitted through a common main objective (1) and a common optical beam dividing system (4) and of which observation tubes one is mounted to be rotatable about the optical axis of the main objective and in which each observation tube (3a, 3b) a magnifying system (2a, 2b) is provided, wherein a composed prism (4) is arranged within the parallel beam path between the main objective (1) and the magnifying systems (2a, 2b) which passes a part of the light reflected back at the object to a first observation tube (3a) and deflects another part of this light to a second observation tube (3b), characterized in that the illumination beam is deflected into the direction of the object field coaxially to the observation beam by a partially transmitting mirror (5) arranged below the main objective (1), and that the composed prism (4) comprises a dividing face (13) which is oblique to the optical axis of the main objective, wherein a reflecting layer (13a) is provided on the dividing face having a longish oval form and being cut symmetrically in a semicircled manner at its longitudinal sides and which deflects the observation beam to the second observation tube (3b), while the observation light to the first observation tube (3a) transmits through the non-reflective regions (13b) of the dividing face (13).

2. Surgical microscope of claim 1, characterized in that the partially transmitting mirror (5) is transmitted by each of the observation ray bundles and by the illumination ray bundle.

3. Surgical microscope of claim 1, characterized in that the composed prism (4) is realised as parallelepiped shaped body and wherein the dividing face (13) extends obliquely to its base surface (12).

4. Surgical microscope of claim 1, characterized in that a light trap (8) is provided within the housing of the illumination apparatus, which light trap eliminates disturbing reflected light.

## Revendications

1. Microscope d'opération avec deux tubes d'observation stéréoscopiques (3a, 3b) dotés chacun d'un système de grossissement (2a, 2b), tubes qui ont des trajets lumineux d'observation traversant un objectif principal (1) et un diviseur optique (4) communs et dont l'un est disposé de manière à pouvoir être orienté par rotation autour de l'axe optique dudit objectif principal, un prisme composé (4) disposé dans la section à rayons parallèles comprise entre ledit objectif principal (1) et les systèmes de grossissement (2a, 2b) transmettant une partie de la lumière réfléchie par l'objet à un premier tube d'observation (3a) et défléchissant une autre partie de la lumière vers un second tube d'observation (3b), caractérisé en ce que le faisceau d'éclairage est dirigé sur le champ objet coaxialement avec le faisceau observé par un miroir de déflexion (5) partiellement transparent placé en dessous de l'objectif principal (1), et en ce que ledit prisme composé (4) présente une surface de séparation (13) orientée obliquement par rapport à l'axe optique de l'objectif principal, ladite surface de séparation portant une couche réfléchissante (13a) qui a la forme d'un ovale oblong diminué symétriquement sur ses grands côtés de segments sensiblement demi-circulaires et qui défléchit les faisceaux à observer vers le second tube d'observation (3b), alors que les zones transparentes (13b) de la surface de séparation (13) laissent passer les faisceaux à observer au premier tube d'observation (3a).

2. Microscope d'opération selon la revendication 1, caractérisé en ce que le miroir de déflexion partiellement transparent (5) est traversé par tous les faisceaux lumineux à observer et par le faisceau d'éclairage.

3. Microscope d'opération selon la revendication 1, caractérisé en ce que le prisme composé (4) est exécuté sous forme d'un parallélipipède rectangle et que sa surface de séparation (13) est orientée obliquement par rapport à sa base (12).

4. Microscope d'opération selon la revendication 1, caractérisé en ce qu'un piège de lumière (8) absorbant les reflets lumineux gênants est aménagé dans le boîtier (6) abritant le dispositif d'éclairage.
